# FASCICULE DE BREVET EUROPEEN

(11) **EP 3 927 916 B1**
(45) Date de publication et mention de la délivrance du brevet: **04.01.2023**
(21) Numéro de dépôt: 20703229.3
(22) Date de dépôt: 04.02.2020
(51) Int. Cl.: E04G 21/30, E04G 21/24, E04G 25/04, E04G 21/28, F16B 7/18, E04G 25/06

(54) **PIÈCE DE JONCTION POUR UN SYSTÈME DE CLOISONNEMENT ET DE PROTECTION D'UN LOCAL, ÉTAI ET SYSTÈME DE CLOISONNEMENT MUNIS D'UNE TELLE PIÈCE DE JONCTION, ET PROCÉDÉ DE MISE EN OEUVRE**
VERBINDUNGSTEIL FÜR EIN SYSTEM ZUM TRENNEN UND SCHÜTZEN VON RÄUMEN, STÜTZE UND TRENNWANDSYSTEM MIT EINEM SOLCHEN VERBINDUNGSTEIL UND VERFAHREN ZU DESSEN DURCHFÜHRUNG
JOINING PART FOR A SYSTEM FOR PARTITIONING AND PROTECTING A PREMISES, PROP AND PARTITIONING SYSTEM PROVIDED WITH SUCH A JOINING PART, AND METHOD FOR IMPLEMENTATION THEREOF

(30) Priorité: 18.02.2019 FR 1901608
(43) Date de publication de la demande: 29.12.2021
(73) Titulaire: Le Gall, Stéphanie, 35800 Dinard (FR)
(72) Inventeur: CHANCEREL, Philippe, 61550 Glos la Ferrière (FR); LE GALL, Stéphanie, 35800 Dinard (FR)
(74) Mandataire: Rataboul, Xavier
(86) Numéro de dépôt international: PCT/EP2020/052684
(87) Numéro de publication internationale: WO 2020/169330

(56) Documents cités:
- US-A1- 2017 020 322

## Description

La présente invention se rapporte à une pièce de jonction pour un système de cloisonnement et de protection d'un local.

L'invention concerne également un étai muni d'au moins une telle pièce de jonction.

L'invention concerne également, un système de cloisonnement et de protection, ainsi qu'un procédé de mise en oeuvre.

Le système de cloisonnement concerné par l'invention est du type comprenant un cadre, généralement constitué d'une pluralité d'éléments longitudinaux, de préférence tubulaires ou en profilés, sur lesquels est fixé un élément d'obturation souple de type bâche.

Dans la présente invention, on entend par cadre une structure rigide apte à supporter l'élément d'obturation souple. Il n'est cependant pas essentiel que la structure soit fermée sur elle-même. Par exemple, le cadre peut ainsi comprendre deux montants verticaux et une seule traverse transversale. Dans un autre exemple non limitatif, le cadre peut être constitué uniquement de traverses transversales en contact avec le plafond, et maintenu ainsi par deux étais.

Le document WO2015140301 décrit un cadre précité utilisé pour obturer une ouverture, telle qu'une porte.

Ce système comprend essentiellement quatre profilés télescopiques agencés, en utilisation, à droite, à gauche, en haut et en bas de l'ouverture afin de constituer un cadre de support d'une bâche d'obturation.

Les profilés comprennent chacun deux gorges agencées de telle sorte que, en position d'utilisation, le cadre ainsi formé présente une première gorge périphérique frontale et une deuxième gorge périphérique latérale dirigée vers l'intérieur de l'espace délimité par le cadre.

La bâche d'obturation est fixée par pincement sur le cadre par l'intermédiaire d'un joint inséré en force dans la gorge périphérique frontale. Cette bâche comprend avantageusement une ouverture à glissière agencée pour créer une ouverture temporaire permettant le passage des ouvriers.

Les profilés sont reliés rigidement, par serrage, aux quatre coins par des pièces d'angle rigide en L, puis un ressort plat est optionnellement fixé dans la gorge périphérique latérale. Du fait de la fixation rigide entre un profilé vertical (droit ou gauche), une pièce de jonction rigide en L et un profilé horizontal (haut ou bas), chaque ressort exerce une poussée sur chaque montant vertical et horizontal de telle sorte qu'ils prennent appui contre les côtés et le plafond de l'ouverture.

Un tel système est utilisé dans le cadre de travaux, par exemple de rénovation d'un local d'un bâtiment, qui sont connus pour être une source de poussières, parfois très volatiles, qui peuvent envahir et/ou se répandre dans les autres pièces du bâtiment directement connectées au local en travaux.

Les poussières en question peuvent parfois présenter des propriétés polluantes ou toxiques, et sont donc dangereuses, de par leur taille de particules et/ou leur nature physico-chimique.

Par exemple, dans le cas de travaux de désamiantage d'un bâtiment, il y a une génération de poussières ou de résidus fins d'amiante qui ne doivent en aucun cas être libérés dans l'environnement extérieur au local en travaux.

Si le système décrit dans le document WO2015140301 permet d'assurer une parfaite étanchéité entre les pièces en obstruant les portes d'accès, il n'est véritablement efficace que pour des ouvertures relativement étroites telles que des portes ou des fenêtres de largeur inférieure à 1,5 mètre.

En effet, occulter une ouverture large avec ce système n'est pas efficace, car les profilés télescopiques horizontaux, et en particulier le profilé télescopique supérieur peuvent présenter une flèche importante créant une brèche conséquente dans l'étanchéité du système.

Le document WO2018073534 décrit un montant télescopique comprenant deux pièces de jonction en T aux profilés assurant à la fois une continuité d'étanchéité de la bâche, ce qui est essentiel pour certaines applications, et une répartition de la contrainte qui supprime la flèche sur une distance étendue sans écraser les profilés.

Ce document propose un mode de réalisation de la pièce de jonction élastique en T permettant une installation non linéaire du système d'obturation en formant un angle dans le cadre. Ce mode de réalisation permet le contournement d'obstacle (poteaux, colonnes sanitaires, installations inamovibles, etc.), sans avoir à prendre appui contre cet obstacle. Il permet également le cloisonnement d'une pièce.

Cependant, ce système n'est pas très polyvalent, car les angles entre les bras de la pièce de jonction en T sont fixes. Ce système ne permet donc pas de s'adapter aux conformations du local, sauf à disposer d'une multitude de pièces de jonction dont les bras forment des angles différents.
Le document US2017020322 divulgue une pièce de jonction d'un système d'obturation.

La présente invention vise donc à proposer un système de cloisonnement et de protection polyvalent, permettant de cloisonner un local, quelle qu'en soit sa configuration, notamment angulaire, et/ou de protéger un mur en agençant le système au plus près du mur sans pour autant être fixé contre lui, comme les tasseaux de bois des systèmes classiques utilisés notamment pour le désamiantage.

Un autre objectif de l'invention est de fournir un système d'obturation polyvalent, économique à fabriquer, totalement démontable pour pouvoir être nettoyer et ainsi être utilisé lors d'opérations de nettoyage sensible, notamment, mais non exclusivement, lors d'opération de désamiantage ou d'extraction de revêtement au plomb et/ou à la silice.

Un autre objectif de l'invention est de fournir un système d'obturation polyvalent, économique à fabriquer, totalement démontable, et pouvant assurer une continuité d'étanchéité de fixation de la bâche.

En effet, la fixation de la bâche se fait en pinçant le rebord de la bâche dans une gorge des profilés constituant le cadre et en insérant en force un moyen de retenue combiné à un joint d'étanchéité dans ladite gorge par-dessus la bâche.

Selon l'invention, le système d'obturation doit être démontable et réutilisable sans que des éléments le constituant ne soient endommagés d'une utilisation à l'autre, ceci dans le but de pouvoir les réutiliser d'une mise en place à l'autre d'un système d'obturation.

A cette fin, l'invention a pour objet une pièce de jonction selon la revendication 1 pour un système de cloisonnement et de protection d'un local de type délimité par un sol, un plafond et des murs, le système étant du type comprenant au moins deux étais télescopiques et une pluralité d'éléments longitudinaux de constitution d'un cadre de support d'au moins un élément d'obturation souple de type bâche, la pièce de jonction comprenant :
- un patin de contact avec une surface d'appui comprenant un cylindre de hauteur déterminée présentant un axe longitudinal et muni d'un premier épaulement périphérique de retenue ;
- deux anneaux superposés insérés autour du cylindre du patin de contact et montés rotatifs l'un par rapport à l'autre, chaque anneau présentant une feuillure périphérique transversale délimitée par un fond de feuillure, une base de feuillure et un bord de feuillure, les deux feuillures formant ensemble, en position d'utilisation, une rainure périphérique de fixation réversible d'un joint de fixation de l'élément d'obturation, chaque anneau comprenant, en outre, un ergot centrifuge pour la fixation d'un élément longitudinal du système de cloisonnement et de protection, en position d'utilisation ;
- un socle de support d'un étai télescopique, en position d'utilisation, muni d'un second épaulement de retenue, le socle de support et le patin de contact comprenant des moyens de fixation complémentaires, la hauteur du cylindre étant choisie de telle sorte que les anneaux sont libres en rotation autour du cylindre, mais en butée contre les deux épaulements de retenue lorsque le socle est fixé au patin.

Selon des modes de réalisation particuliers :
- les deux anneaux peuvent être identiques et agencés en opposition autour du cylindre du patin de contact ;
- chaque ergot peut comprendre une portion fixe de liaison à l'anneau et une portion pivotante de fixation d'un élément longitudinal du système de cloisonnement et de protection, montée pivotante sur la portion fixe par un axe de pivotement, entre une position coplanaire avec l'anneau qui porte l'ergot et une position perpendiculaire à l'anneau qui porte l'ergot ;
- la portion fixe peut comprendre un bord rectiligne relié tangentiellement au fond de la feuillure de l'anneau, prolongé par un bord curviligne concave relié tangentiellement au bord de la feuillure ;
- la portion pivotante de fixation de chaque ergot peut présenter une extrémité de section complémentaire d'un élément longitudinal du système de cloisonnement et de protection pour que la portion pivotante et l'élément longitudinal soient fixés par insertion de manière réversible, en position d'utilisation ;
- la portion pivotante de chaque ergot peut présenter une extrémité de fixation en forme de crochet destinée à s'engager réversiblement autour de l'axe de pivotement fixé sur la portion fixe ;
- le socle de support d'un étai peut comprendre des moyens de fixation réversible de l'étai, en position d'utilisation ;
- les moyens de fixation réversible peuvent comprendre des griffes de retenue conformée pour s'enclencher réversiblement contre une extrémité de l'étai, en position d'utilisation ; et/ou
- le socle de support et/ou le patin de contact peut comprendre une grille de renfort perpendiculaire au socle de support.

L'invention se rapporte également à un étai télescopique selon la revendication 10 pour un système de cloisonnement et de protection d'un local de type délimité par un sol, un plafond et des murs, le système étant du type comprenant au moins deux étais télescopiques et une pluralité d'éléments longitudinaux de constitution d'un cadre de support d'au moins un élément d'obturation souple de type bâche, l'étai comprenant une portion longitudinale télescopique, un moyen de serrage en position déployée, et deux extrémités d'appui, au moins une des extrémités d'appui étant fixée à un socle de support d'une pièce de jonction précédente.

Selon des modes de réalisation particuliers :
- le socle de support de la pièce de jonction peut être fixé de manière réversible à l'extrémité d'appui ;
- le socle de support de la pièce de jonction peut être fixé de manière non réversible à l'extrémité d'appui ; et/ou
- la portion longitudinale télescopique peut comprendre une face frontale, en position d'utilisation, comprenant une gorge longitudinale continue de fixation de l'élément d'obturation.

L'invention a également pour objet un système de cloisonnement et de protection d'un local de type délimité par un sol selon la revendication 14, un plafond et des murs, le système étant du type comprenant au moins deux étais télescopiques et une pluralité d'éléments longitudinaux de constitution d'un cadre de support d'au moins un élément d'obturation souple de type bâche, caractérisée en ce qu'il comprend, en outre, au moins une pièce de jonction précédente.

Selon des modes de réalisation particuliers :
- les éléments longitudinaux de constitution d'un cadre peuvent comprendre une face frontale, en position d'utilisation, munie une gorge périphérique continue de fixation de l'élément d'obturation ;
- le système de cloisonnement et de protection peut comprendre au moins un étai télescopique précédent.

L'invention a également pour objet un procédé de selon la revendication 17 cloisonnement et de protection d'un local de type délimité par un sol, un plafond et des murs, avec un système de cloisonnement et de protection précédent, comprenant les étapes suivantes :
A) positionner sur le sol les pièces de jonctions précédentes aux endroits du local où un renvoi d'angle ou un étayage est nécessaire ;
B) positionner une extrémité inférieure d'un étai sur chaque pièce de jonction positionnée au sol, et positionner une pièce de jonction à une extrémité supérieure de chaque étai, puis déployer la portion longitudinale télescopique de chaque étai jusqu'à ce que la pièce de jonction à leur extrémité supérieure soit appuyée en force contre le plafond, puis activer le moyen de serrage en position déployée de sorte que chaque étai soit appuyé en force entre le sol et le plafond par l'intermédiaire des pièces de jonction ;
C) pivoter les anneaux de chaque pièce de jonction dans une position angulaire souhaitée pour conformer le cloisonnement du local ;
D) fixer des éléments longitudinaux de constitution d'un cadre aux ergots des anneaux des pièces de jonction jusqu'à constituer un cadre adapté à une conformation souhaitée ;
E) fixer l'élément d'obturation souple de type bâche aux éléments longitudinaux du cadre.

Dans un mode de réalisation particulier, les éléments longitudinaux de constitution d'un cadre peuvent comprendre une face frontale, en position d'utilisation, munie une gorge longitudinale continue de fixation de l'élément d'obturation, l'étape E) étant réalisée en pinçant le rebord de l'élément d'obturation dans une gorge longitudinale continue des éléments longitudinaux et en insérant en force des clips métalliques dans ladite gorge par-dessus la bâche, puis en insérant un joint d'étanchéité continu en force dans les clips métalliques et dans ladite gorge.

D'autres caractéristiques de l'invention seront énoncées dans la description détaillée ci-après, faite en référence aux dessins annexés, qui représentent, respectivement :
[Fig. 1], une vue schématique éclatée en perspective d'une pièce de jonction selon l'invention ;
[Fig. 2], une vue schématique en plan de côté de la pièce de jonction selon l'invention ;
[Fig. 3], une vue schématique en plan de dessus d'un des anneaux de la pièce de jonction selon l'invention ;
[Fig. 4], une vue schématique en coupe de l'anneau de la figure 3 selon la ligne de coupe IV-IV ;
[Fig. 5], une vue schématique en perspective d'une pièce de jonction selon l'invention en prise avec deux éléments longitudinaux d'un système de cloisonnement d'un local, selon une conformation angulaire à 90°, et dans laquelle un joint de fixation d'une bâche a été inséré ;
[Fig. 6], une vue schématique en perspective de la pièce de jonction de la figure 5 selon un autre angle de vue exposant le montage en rotation des ergots de fixation des éléments longitudinaux sur les anneaux ;
[Fig. 7], une vue schématique vue de dessus d'une pièce de jonction selon l'invention selon une conformation angulaire à 270° ;
[Fig. 8], une vue schématique en perspective de la pièce de jonction de la figure 7 selon un autre angle de vue exposant la rainure de fixation d'un joint de fixation d'une bâche ;
[Fig. 9], une vue schématique vue de côté d'un système de cloisonnement selon l'invention mis en place dans un local muni d'une sous-pente ;
[Fig. 10], une vue schématique en perspective d'un système de cloisonnement selon l'invention mis en place dans un local pour délimiter un sas autour d'une ouverture du local ; et
[Fig. 11], une vue schématique en perspective d'une pièce de jonction selon l'invention dans laquel l'un des ergots comprend une portion pivotante en forme de crochet démontable manuellement, c'est-à-dire sans outil ;

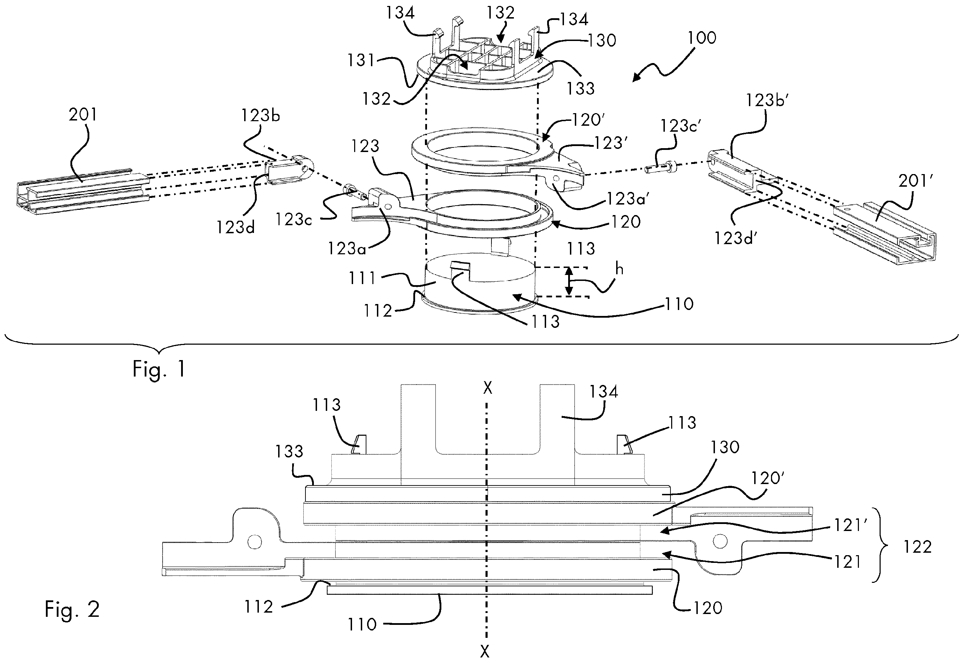

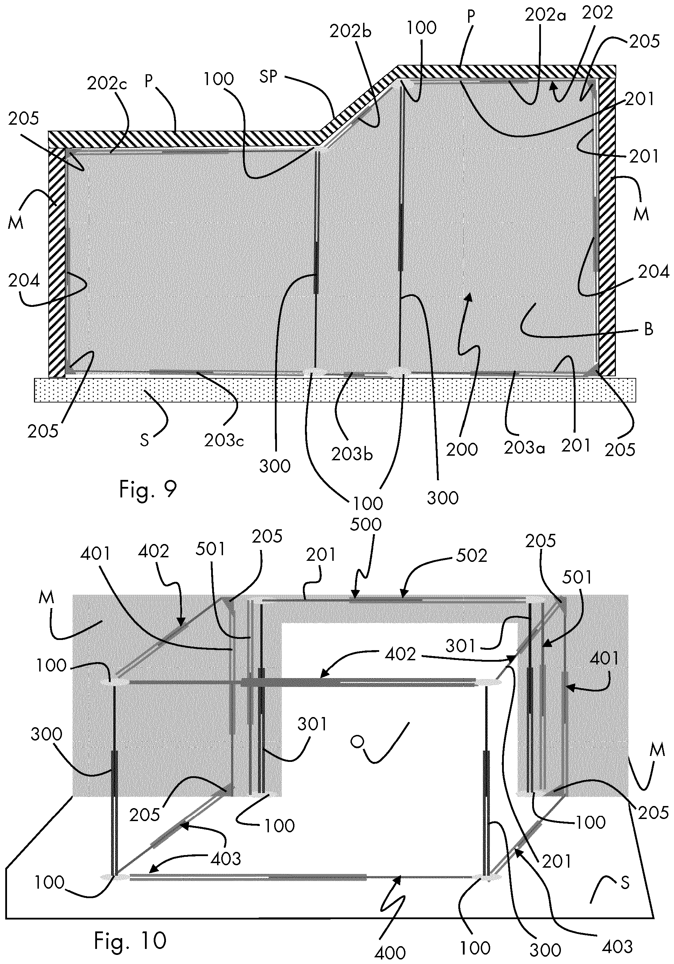

La figure 1 illustre une pièce de jonction 100 selon l'invention, pour un système de cloisonnement et de protection d'un local, tel que celui illustré en figures 9 et 10 à titre exemplatif et non limitatif.

Ainsi, le système de cloisonnement 200 comprend une pluralité d'éléments longitudinaux 201 de constitution d'un cadre de support d'au moins un élément d'obturation souple de type bâche.

Comme illustré à titre d'exemple en figure 9, le cadre peut comprendre une traverse transversale 202 supérieure en contact avec le plafond P, une traverse transversale 203 inférieure en contact avec le sol S et au moins deux montants longitudinaux 204 en contact avec deux murs M ou deux parties distantes d'un mur. Alternativement, le cadre peut comprendre au moins trois traverses transversales supérieure en contact avec le plafond et reliées entre elles par des pièces de jonction 100 selon l'invention, et au moins trois traverses transversales inférieures en contact avec le sol et reliées entre elles par des pièces de jonction 100 selon l'invention. Les traverses transversales sont maintenues en contact avec le plafond grâce à trois étais positionnés entre les pièces de jonction supérieures et inférieures selon l'invention.

D'autres conformations sont possible. En tout état de cause, le système selon l'invention est très polyvalent grâce à la pièce de jonction selon l'invention.

Les traverses transversales 203 et les montants longitudinaux 204 sont reliés les uns aux autres par des pièces angulaires telles que celles décrites dans le brevet FR3018840 ou dans le brevet FR3057596, lorsque les éléments longitudinaux se rencontrent à la jonction de deux surfaces d'appui adjacentes et perpendiculaires, telles qu'un mur et le plafond ou un mur et le sol.

La pièce de jonction selon l'invention permet la jonction de deux éléments longitudinaux 201 lorsque les éléments longitudinaux se rencontrent à la jonction de deux surfaces d'appui non adjacentes, typiquement entre le plafond et le sol, ou le long d'une surface non plane, telle qu'un plafond P muni d'une sous-pente SP (figure 9).

La pièce de jonction 100 selon l'invention illustrée aux figures 1 et 2, comprend un patin de contact 110 avec une surface d'appui (le sol S ou le plafond P). Le patin 110 comprenant un cylindre 111 de hauteur h, présentant un axe longitudinal X-X et muni d'un premier épaulement périphérique de retenue 112.

La pièce de jonction 100 comprend également deux anneaux 120-120' superposés, insérés librement autour du cylindre 111 du patin cylindrique 110 pour être montés rotatifs l'un par rapport à l'autre. La pièce de jonction selon l'invention permet d'utiliser, de préférence, deux anneaux 120-120' identiques et agencés en opposition autour du cylindre 111 du patin de contact, ce qui permet de limiter le nombre de pièces différentes pour fabriquer la pièce de jonction.

La pièce de jonction 100 comprend, en outre, un socle 130 de support d'un étai télescopique, en position d'utilisation, muni d'un second épaulement de retenue 131. Le socle 130 est muni de moyens de fixation 132 du patin de contact 110. La hauteur h du cylindre 111 est choisie de telle sorte que les anneaux sont libres en rotation autour du cylindre, mais en butée contre les deux épaulements de retenue 112-131 lorsque le socle 130 est fixé au patin 110. En d'autres termes, les anneaux 120, 120' ont une hauteur h1 strictement inférieur à la moitié de la hauteur h du cylindre.

Plus précisément, le socle 130 de support et le patin de contact 110 comprennent des moyens de fixation complémentaires. Comme illustré en figures 1 et 2, ces moyens de fixation complémentaires peuvent être, par exemple, des griffes 113 déformables élastiquement (portées avantageusement par le patin de contact 110) et des encoches de blocage 132 (portées avantageusement par le socle 130 de support). Dans ce cas, il suffit à l'utilisateur de pincer les griffes pour les déformer et les désengager des encoches de blocage pour démonter la pièce de jonction selon l'invention.

Alternativement, les moyens de fixation peuvent être constitués par exemple d'orifices taraudés et de vis, si l'on souhaite que le démontage nécessite des outils.

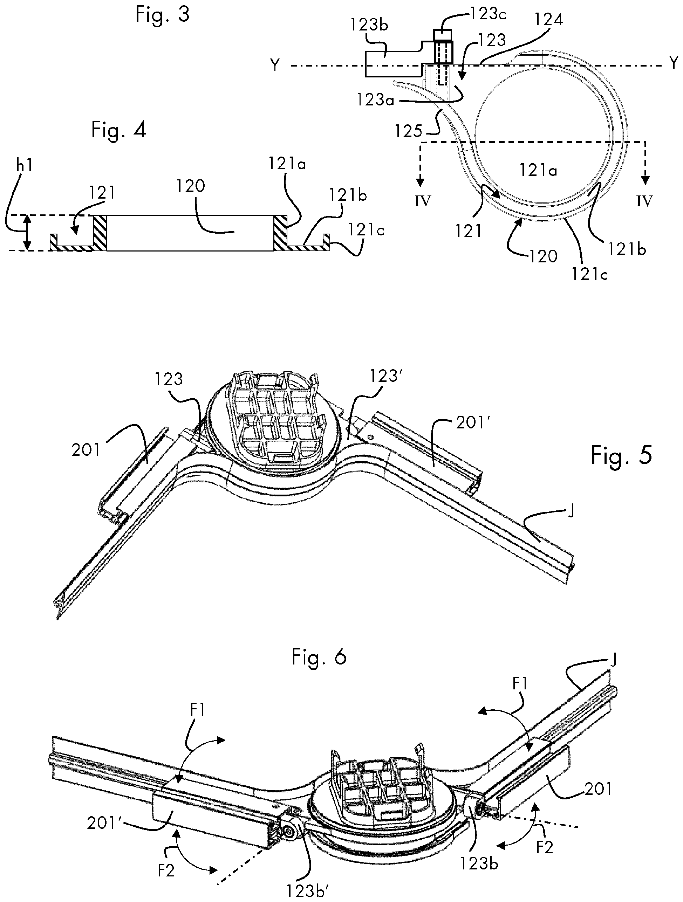

Par ailleurs, comme illustré aux figures 3 et 4, chaque anneau 120-120' selon l'invention présente une feuillure périphérique transversale 121 délimitée par un fond de feuillure 121a, une base de feuillure 121b et un bord de feuillure 121c.

Ainsi, les deux anneaux 120-120' sont agencés en opposition autour du cylindre 111 du patin de contact 110 de telle sorte que les deux feuillures 121-121' forment ensemble une rainure périphérique 122 de fixation réversible d'un joint de fixation J (voir figure 5) de l'élément d'obturation en position d'utilisation.

Chaque anneau comprend également un moyen de fixation d'un élément longitudinal du système de cloisonnement. De préférence, le moyen de fixation comprend un ergot centrifuge 123 pour la fixation d'un élément longitudinal du système de cloisonnement, en position d'utilisation.

Ainsi, grâce à la pièce de jonction selon l'invention, il est possible de fixer les éléments longitudinaux du système de cloisonnement selon autant de positions angulaires qu'on le souhaite, ce qui permet d'agencer le système de cloisonnement dans n'importe quelle configuration spatiale.

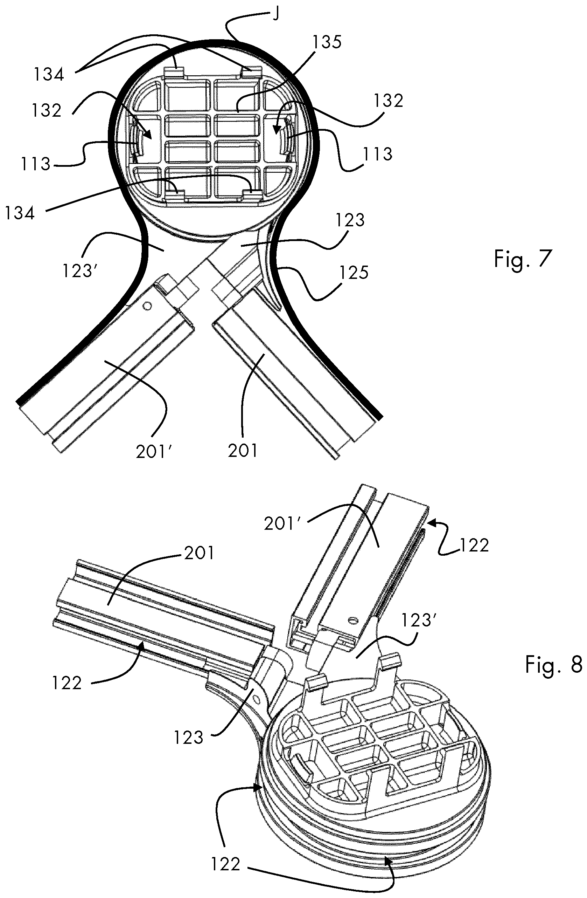

Comme illustré en figures 7 et 8, la pièce de jonction permet un positionnement angulaire jusqu'à 270° (voir plus selon le dimensionnement des ergots et des éléments longitudinaux du système de cloisonnement) tout en ménageant une rainure périphérique de fixation 122 continue, assurant une fixation parfaitement étanche de la bâche par un joint, quel que soit l'angle relatif entre les deux ergots 123-123'.

Tout type de bâche peut être utilisé, notamment mais non exclusivement, une bâche en matériau polymère, tel que le polyéthylène, notamment, les bâches de la marque Polyane^{®}.

La structure de la pièce de jonction selon l'invention permet ainsi le maintien des traverses transversales supérieures (en contact avec le plafond) et inférieures (en contact avec le sol), quelle que soit la configuration du local et/ou du cloisonnement souhaité.

Un autre avantage considérable est que la pièce de jonction reste en dehors de la zone délimitée par l'élément d'obturation (la bâche), et ce quel que soit l'angle relatif entre les deux ergots 123-123'. Il est donc possible de procéder à des travaux générant des poussières toxiques, sans risque de contaminer les pièces de jonction. Cependant, la structure entièrement démontable de la pièce de jonction permet néanmoins de la nettoyer en profondeur.

Selon un mode de réalisation préféré, chaque ergot 123-123' comprend avantageusement une portion fixe 123a-123a' de liaison à l'anneau 120-120' et une portion de fixation pivotante 123b-123b' d'un élément longitudinal du système de cloisonnement, montée pivotante sur la portion fixe 123a-123a' par un axe 123c-123c' (voir flèches F1 et F2 sur la figure 6), entre une position coplanaire avec l'anneau 120-120' qui le porte et une position perpendiculaire au plan de l'anneau 120-120' qui le porte.

Ce mode de réalisation permet une meilleure polyvalence de la pièce de jonction selon l'invention qui permet un réglage angulaire selon un même plan, grâce aux anneaux rotatifs, mais également un réglage angulaire selon des plans différents, grâce aux portions de fixation pivotantes 123b.

De préférence, comme illustrée sur la figure 5 qui est aussi valable pour un anneau 120', la portion fixe 123a de l'ergot 123 s'étend selon une direction Y-Y sensiblement tangentielle à l'anneau. À cette fin, la portion fixe 123a de l'ergot 123 comprend un bord rectiligne 124 dont une extrémité proximale est reliée tangentiellement au fond 121a de la feuillure 121 de l'anneau. Le bord rectiligne 124 est prolongé à son extrémité distale par un bord curviligne concave 125 relié tangentiellement au bord 121c de la feuillure 121. Le bord 121c de la feuillure étant convexe, il existe une inversion de courbure entre l'anneau et l'ergot. Cette inversion de courbure assure une fixation régulière du joint (et donc de la bâche) dans la rainure périphérique 122, et maintient une parfaite étanchéité de la fixation, quelle que soit la position angulaire relative des ergots 123-123' (voir figures 7 et 8).

La structure de la pièce de jonction 100 selon l'invention permet de l'adapter à tout type de système de cloisonnement existant, notamment ceux dont les éléments longitudinaux sont constitués de profilés, par exemple ceux décrits dans les brevets FR3018847, FR3018840, FR3018841 et FR3057596.

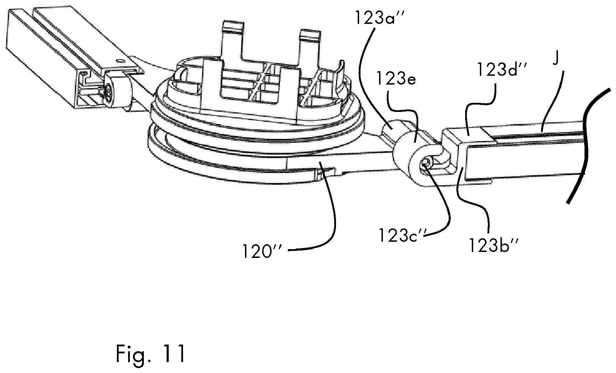

À cette fin, la portion pivotante de fixation 123b-123b' de chaque ergot 123-123' présente une extrémité de fixation 123d-123d' de section complémentaire d'un élément longitudinal 201-201' du système de cloisonnement pour que la portion pivotante et l'élément longitudinal soient fixés par insertion de manière réversible, en position d'utilisation. Dans le mode de realisation illustré en figure 6, les extrémités de fixation des portions pivotantes 123b-123b' sont toutes les deux insérées dans l'élément longitudinal correspondant. Alternativement, comme illustré en figure 11, une portion pivotante 123b" peut comprendre une extrémité 123d" ayant une section complémentaire de l'élément longitudinal J telle que c'est ce dernier qui est inséré dans l'extrémité 123d", de sorte que la portion pivotante et l'élément longitudinal J sont fixés par insertion de manière reversible.

La fixation réversible peut être obtenue de plusieurs manières. Par exemple, les éléments longitudinaux comprennent une vis traversante qui peut être vissée en appui contre la portion pivotante de fixation 123 insérée dans l'élément longitudinal 201-201'.

Alternativement, la portion pivotante de fixation 123 peut être dimensionnée pour nécessiter une insertion en force dans le profilé de l'élément longitudinal.

Également alternativement, les éléments longitudinaux peuvent comprendre un trou à leur extrémité et la portion pivotante de fixation 123 peut comprendre un pion escamotable sur ressort destiné à bloquer l'élément longitudinal lorsqu'il est inséré dans le trou de ce dernier. Pour retire l'élément longitudinal, l'utilisateur appui sur le pion qui s'escamote et permet le retrait de l'élément longitudinal.

Le socle de support 130 de la pièce de jonction 100 selon l'invention est destiné à recevoir un étai et, plus particulièrement une extrémité d'un étai, pour que la pièce de jonction soit appuyée en force contre une surface et reste en position.

Avantageusement, le socle de support 130 comprend des moyens de fixation réversible de l'étai, en position d'utilisation. Cela évite que l'étai ne glisse du socle de support.

Dans un mode de réalisation le plus simple, non illustré, les moyens de fixation réversible sont constitués par un épaulement vertical, c'est-à-dire perpendiculaire à la surface 133 du socle de support 130 destinée à être en contact avec l'étai.

Avantageusement, comme illustrés notamment sur les figures 1 et 2, les moyens de fixation réversible comprennent des griffes de retenue 134 conformée pour s'enclencher réversiblement contre une extrémité de l'étai, en position d'utilisation.

Généralement, un étai comprend une portion longitudinale télescopique, un moyen de serrage en position déployée, et deux extrémités d'appui habituellement constituées par des plaques d'appui montées pivotantes sur la portion longitudinale télescopique.

Les griffes 134 sont donc agencées pour se déformer élastiquement lorsqu'une plaque d'extrémité est appliquée contre elles en force, puis à reprendre leur forme pour bloquer la plaque contre le socle de support 130.

D'autres moyens de fixation réversible peuvent être envisagés, comme, par exemple et de manière non limitative, un aimant ou un passant sous lequel la plaque d'extrémité est glissée.

De manière également avantageuse, le socle de support 130 comprend une grille de renfort 135 perpendiculaire à la surface du socle de support 130. Cette grille de renfort permet d'appliquer une force de compression de plusieurs centaines de kilos, très largement suffisante pour s'assurer que l'étai bloque en position la ou les pièces de jonction en contact avec sa ou ses extrémités.

Alternativement ou en combinaison, le patin de contact 110 peut comprendre également une grille de renfort, par exemple à l'intérieur du cylindre si ce dernier est creux. Ce mode de réalisation présente l'avantage de limiter la quantité de matière nécessaire à la fabrication, de limiter le poids de la pièce de jonction selon l'invention, tout en assurant une résistance optimale à la compression.

L'invention se rapporte également à un étai télescopique pour un système de cloisonnement précédemment décrit, l'étai comprenant une portion longitudinale télescopique, un moyen de serrage en position déployée, et deux extrémités d'appui, dont au moins une est fixée à un socle de support d'une pièce de jonction selon l'invention, de manière réversible ou de manière non réversible.

Il est ainsi possible de commercialiser des étais qui comprennent directement une ou deux pièces de jonction selon l'invention (amovibles ou non).

Avantageusement, l'étai télescopique selon l'invention comprend, en outre, une portion longitudinale télescopique munie d'une face frontale comprenant une gorge longitudinale continue de fixation de l'élément d'obturation. Cette gorge présente avantageusement le même profile que la gorge des éléments longitudinaux du système d'obturation.

L'invention se rapporte également à un système de cloisonnement d'un local de type délimité par un sol S, un plafond P-SP et des murs M, le système comprenant au moins deux étais télescopiques et une pluralité d'éléments longitudinaux de constitution d'un cadre comprenant notamment un élément d'obturation souple de type bâche. Selon l'invention, le système de cloisonnement comprend au moins une pièce de jonction selon l'invention, de préférence deux fois plus de pièces de jonction qu'il y a d'étais, pour assurer une parfaite étanchéité au sol comme au plafond.

À cette fin, le système de cloisonnement selon l'invention comprend des éléments longitudinaux de constitution du cadre qui comprennent une face frontale, en position d'utilisation, munie une gorge périphérique continue de fixation de l'élément d'obturation.

Au lieu de comprendre des étais connus et des pièces de jonction selon l'invention, le système de cloisonnement peut comprendre des étais selon l'invention, directement équipés de pièces de jonction selon l'invention.

Pour cloisonner un local de type délimité par un sol S, un plafond P-SP, et des murs M, avec un système de cloisonnement selon l'invention, on commence par positionner sur le sol les pièces de jonctions selon l'invention aux endroits du local où un renvoi d'angle ou un étayage est nécessaire.

On positionne une extrémité inférieure d'un étai sur chaque pièce de jonction positionnée au sol, et on positionner une pièce de jonction à l'autre extrémité supérieure de chaque étai, puis on déploie la portion longitudinale télescopique de chaque étai jusqu'à ce que la pièce de jonction à leur extrémité supérieure soit appuyée en force contre le plafond.

Alternativement, si l'on utilise des étais selon l'invention comprenant directement des pièces de jonction à leurs extrémités, les étapes précédentes se déroulent concomitamment, c'est-à-dire que l'on positionne les étais aux endroits du local où un renvoi d'angle ou un étayage est nécessaire, et on les déploie jusqu'à ce que la pièce de jonction à leur extrémité supérieure soit appuyée en force contre le plafond.

Ensuite, dans les deux cas, on active le moyen de serrage en position déployée de sorte que chaque étai soit appuyé en force entre le sol et le plafond par l'intermédiaire des pièces de jonction.

Dans cette position, on peut alors pivoter alors les anneaux de chaque pièce de jonction dans une position angulaire souhaitée pour conformer le cloisonnement du local, et ceux même si l'étai est en position d'appui. En effet, malgré la force appliquée sur le socle de support, celui-ci la transmet directement au patin de contact sans bloquer les anneaux qui restent libres en rotation autour du cylindre du patin.

Ainsi, le réglage angulaire peut se faire après la fixation des étais, ce qui est très pratique.

Une fois la position angulaire souhaitée obtenue, on fixe les éléments longitudinaux 201-201' de constitution d'un cadre aux ergots 123-123' des anneaux des pièces de jonction jusqu'à constituer un cadre comprenant une traverse transversale supérieure en contact avec le plafond, une traverse transversale inférieure en contact avec le sol et au moins deux montants longitudinaux en contact avec deux murs ou deux parties distantes d'un mur.

Dans l'exemple illustré en figure 9, on a ainsi disposé les étais 300 et les pièces de jonction 100 de part et d'autre de la sous-pente SP. Puis on a constitué le cadre avec les éléments longitudinaux 201.

On a ainsi constitué une traverse transversale supérieure 202 en contact avec le plafond P, une traverse transversale inférieure 203 en contact avec le sol S et au moins deux montants longitudinaux 204 en contact avec deux murs M. Les traverses 202 et 203 comprennent chacune trois segments, respectivement 202a-202b-202c et 203a-203b-203c. Les segments 202a-202c et 203a-203c sont insérés chacun entre une portion de fixation d'une pièce de jonction 100 selon l'invention et une pièce d'angle 205.

Les segments 202b et 203b sont insérés entre une portion de fixation de deux pièces de jonction 100 selon l'invention, de sorte que les éléments longitudinaux du cadre sont parfaitement plaqués contre le sol, le plafond y compris la sous-pente et contre les murs opposés.

Pour finir, on fixe l'élément d'obturation souple de type bâche aux éléments longitudinaux du cadre, de sorte que le cloisonnement est étanche au sol, au plafond et contre les murs.

À cette fin, de préférence, les éléments longitudinaux 201-201' du cadre comprenant une face frontale (c'est-à-dire du même côté, en utilisation que la rainure 122 de la pièce de jonction selon l'invention) munie une gorge longitudinale continue de fixation de l'élément d'obturation. Dans ce cas, la fixation de l'élément d'obturation est réalisée en pinçant le rebord de l'élément d'obturation dans la gorge longitudinale continue des éléments longitudinaux et en insérant en force des clips métalliques dans ladite gorge par-dessus la bâche, puis en insérant un joint d'étanchéité continu en force dans les clips métalliques et dans ladite gorge. Bien entendu, les mêmes opérations sont réalisées au niveau des rainures périphériques 122 des pièces de jonction 100.

Le système selon l'invention permet un cloisonnement et/ou une protection très aisée, sans nécessiter de fixation à un mur, au sol ou au plafond de tasseaux de fixation. Il peut être utilisé en cloisonnement, au milieu d'une pièce par exemple, ou en protection, le long d'un ou plusieurs murs par exemple.

Ainsi, le système selon l'invention est très polyvalent comme illustré à titre d'exemple sur la figure 10.

Ainsi, sur cette figure, on constate que le système selon l'invention permet la création d'un sas 400 en U autour d'une ouverture O dans un mur.

Ce sas 400 est délimité, contre le mur, par des montants verticaux 401 classiques tels que ceux décrits dans les brevets mentionnés précédemment. En regard de ces montants 401, le sas est délimité par deux étais 300 en appui, chacun, entre deux pièces de jonction 100 selon l'invention, l'une agencée en appui contre le sol, l'autre agencée en appui contre le plafond (non illustré par souci de clarté).

Le sas 400 comprend trois traverses transversales supérieures 402, et trois traverses transversales inférieures 403 constituées par des éléments longitudinaux 201 fixés aux portions de fixation 123b-123b' des pièces de jonction 100 et aux pièces d'angle 205.

Les étais 300 appuyés en force contre le sol et le plafond par l'intermédiaire des pièces de jonction 100 participent également au placage des montants verticaux 401 grâce à la rigidité des éléments longitudinaux 201.

Le système selon l'invention permet également de créer une obturation 500 de l'ouverture O dans le mur, l'obturation étant réalisée en application contre le mur grâce aux étais 301. Ces derniers sont en appui, chacun, entre deux pièces de jonction 100 selon l'invention, l'une agencée en appui contre le sol, l'autre agencée en appui contre le plafond.

Les éléments longitudinaux 201 de la traverse transversale supérieure 502 sont fixés aux portions de fixation 123b-123b' des pièces de jonction 100 en appui contre le plafond. Complémentairement, les montants verticaux 501 sont fixés chacun à une portion de fixation 123b-123b' d'une pièce de jonction 100 en appui contre le plafond et à une portion de fixation 123b-123b' d'une pièce de jonction 100 en appui contre le sol. Avantageusement une traverse inférieure peut être fixée entre les portions de fixation 123b-123b' restantes des pièces de jonction 100.

Dans un mode de réalisation avantageux d'anneau 120", l'invention prévoit que la portion pivotante 123b" de chaque ergot peut être fixée réversiblement et sans outil à la portion fixe 123a".

Dans l'exemple de réalisation illustré, la portion pivotante 123b" de chaque ergot présente une extrémité de fixation 123e en forme de crochet, destinée à s'engager réversiblement autour de l'axe de pivotement 123c" fixé sur la portion fixe 123a" de l'ergot.

De préférence, l'extrémité de fixation en crochet 123e comprend un cran de blocage réversible de l'axe 123c" pour éviter une désolidarisation accidentelle de la portion pivotante et de l'axe.

Ainsi, la portion pivotante 123b" fixée à l'élément longitudinal J peut être crochetée autour de l'axe de pivotement 123c" après que la pièce de jonction ait été installée et maintenue en position en force par l'étai.

Bien entendu, le mode de réalisation illustré en figure 11 est donné à titre exemplatif et non limitatif.

Ainsi, les deux portions pivotantes des deux ergots peuvent comporter une extrémité de fixation 123e en forme de crochet. De même, l'extrémité 123d-123d'-123d" des portions pivotantes pour la fixation à l'élément longitudinal du cadre peuvent avoir une section complémentaire dudit élément longitudinal telle que ce dernier est inséré dans la portion pivotante ou telle que la portion pivotante est insérée dans l'élément longitudinal.

Grâce au système selon l'invention, il n'est plus nécessaire de fixer le système d'obturation dans le cadre de la porte, ce qui permet de fermer la porte pour sécuriser le chantier.

La pièce de jonction est avantageusement en matériau polymère, notamment mais non essentiellement, injecté de fibre de renfort telles que des fibres de verre, car sa structure permet une fabrication par injection. En outre, les deux anneaux étant avantageusement identiques, ils ne nécessitent qu'un seul moule.

## Revendications

1. Pièce de jonction (100) pour un système (200) de cloisonnement et de protection d'un local de type délimité par un sol (S), un plafond (P, SP) et des murs (M), le système (200) étant du type comprenant au moins deux étais télescopiques et une pluralité d'éléments longitudinaux (201, 201') de constitution d'un cadre de support d'au moins un élément d'obturation souple de type bâche, **caractérisée en ce que** la pièce de jonction comprend :
• un patin de contact (110) avec une surface d'appui comprenant un cylindre (111) de hauteur déterminée (h) présentant un axe longitudinal (X-X) et muni d'un premier épaulement périphérique de retenue (112);
• deux anneaux (120, 120') superposés insérés autour du cylindre (111) du patin de contact et montés rotatifs l'un par rapport à l'autre, chaque anneau présentant une feuillure périphérique transversale (121, 121') délimitée par un fond de feuillure (121a), une base de feuillure (121b) et un bord de feuillure (121c), les deux feuillures formant ensemble, en position d'utilisation, une rainure périphérique (122) de fixation réversible d'un joint (J) de fixation de l'élément d'obturation, chaque anneau comprenant, en outre, un ergot centrifuge (123, 123') pour la fixation d'un élément longitudinal (201, 201') du système de cloisonnement et de protection, en position d'utilisation ;
• un socle de support (130) d'un étai télescopique (300, 301), en position d'utilisation, muni d'un second épaulement de retenue (131), le socle de support (130) et le patin de contact (110) comprenant des moyens de fixation complémentaires (113-132), la hauteur (h) du cylindre (111) étant choisie de telle sorte que les anneaux (120, 120') sont libres en rotation autour du cylindre (111), mais en butée contre les deux épaulements de retenue (112-131) lorsque le socle (130) est fixé au patin (110).

2. Pièce de jonction selon la revendication 1, dans laquelle les deux anneaux (120, 120') sont identiques et agencés en opposition autour du cylindre du patin de contact.

3. Pièce de jonction selon l'une quelconque des revendications 1 ou 2, dans laquelle chaque ergot (123, 123') comprend une portion fixe (123a, 123a') de liaison à l'anneau et une portion pivotante (123b, 123b') de fixation d'un élément longitudinal (201, 201') du système de cloisonnement et de protection, montée pivotante sur la portion fixe (123a, 123a') par un axe de pivotement (123c-123c') entre une position coplanaire avec l'anneau qui porte l'ergot et une position perpendiculaire à l'anneau qui porte l'ergot.

4. Pièce de jonction selon la revendication 3, dans laquelle la portion fixe (123a, 123a') comprend un bord rectiligne (124) relié tangentiellement au fond (121a) de la feuillure (121) de l'anneau, prolongé par un bord curviligne concave (125) relié tangentiellement au bord (121c) de la feuillure (121).

5. Pièce de jonction selon l'une quelconque des revendications 3 ou 4, dans laquelle la portion pivotante (123b, 123b') de fixation de chaque ergot présente une extrémité (123d, 123d', 123d") de section complémentaire d'un élément longitudinal (201, 201') du système de cloisonnement et de protection pour que la portion pivotante et l'élément longitudinal soient fixés par insertion de manière réversible, en position d'utilisation.

6. Pièce de jonction selon la revendication 3 ou 5, dans laquelle la portion pivotante (123b") de chaque ergot présente une extrémité de fixation (123e) en forme de crochet destinée à s'engager réversiblement autour de l'axe de pivotement (123c") fixé sur la portion fixe (123a, 123a').

7. Pièce de jonction selon l'une quelconque des revendications 1 à 5, dans laquelle le socle de support (130) d'un étai comprend des moyens de fixation réversible (134) de l'étai, en position d'utilisation.

8. Pièce de jonction selon la revendication 7, dans laquelle les moyens de fixation réversible (134) comprennent des griffes de retenue conformée pour s'enclencher réversiblement contre une extrémité de l'étai, en position d'utilisation.

9. Pièce de jonction selon l'une quelconque des revendications 1 à 8, dans laquelle le socle de support et/ou le patin de contact comprend une grille de renfort (135) perpendiculaire au socle de support (130).

10. Étai télescopique (300, 301) pour un système (200) de cloisonnement et de protection d'un local de type délimité par un sol (S), un plafond (P, SP) et des murs (M), le système (200) étant du type comprenant au moins deux étais télescopiques et une pluralité d'éléments longitudinaux (201, 201') de constitution d'un cadre de support d'au moins un élément d'obturation souple (B) de type bâche, l'étai comprenant une portion longitudinale télescopique, un moyen de serrage en position déployée, et deux extrémités d'appui, **caractérisé en ce qu'**au moins une des extrémités d'appui est fixée à une pièce de jonction (100) selon l'une quelconque des revendications 1 à 9, par le socle de support (130) de la pièce de jonction.

11. Étai télescopique selon la revendication 10, dans lequel le socle de support de la pièce de jonction est fixé de manière réversible à l'extrémité d'appui.

12. Étai télescopique selon la revendication 10, dans lequel le socle de support de la pièce de jonction est fixé de manière non réversible à l'extrémité d'appui.

13. Étai télescopique selon l'une quelconque des revendications 9 à 12, dans lequel la portion longitudinale télescopique comprend une face frontale, en position d'utilisation, comprenant une gorge longitudinale continue de fixation de l'élément d'obturation (B).

14. Système de cloisonnement et de protection d'un local de type délimité par un sol (S), un plafond (P, SP) et des murs (M), le système (200) étant du type comprenant au moins deux étais télescopiques et une pluralité d'éléments longitudinaux (201, 201') de constitution d'un cadre de support d'au moins un élément d'obturation souple (B) de type bâche, **caractérisée en ce qu'**il comprend, en outre, au moins une pièce de jonction (100) selon l'une quelconque des revendications 1 à 9.

15. Système de cloisonnement et de protection selon la revendication 14, dans lequel les éléments longitudinaux (201, 201') de constitution d'un cadre comprennent une face frontale, en position d'utilisation, munie une gorge périphérique continue de fixation de l'élément d'obturation (B).

16. Système de cloisonnement et de protection selon l'une quelconque des revendications 14 ou 15, comprenant au moins un étai télescopique (300, 301) selon l'une quelconque des revendications 10 à 13.

17. Procédé de cloisonnement et de protection d'un local de type délimité par un sol (S), un plafond (P, SP) et des murs (M), avec un système de cloisonnement et de protection selon l'une quelconque des revendications 14 à 16, comprenant les étapes suivantes :
A) positionner sur le sol les pièces de jonctions (100) selon l'une quelconque des revendications 1 à 9 aux endroits du local où un renvoi d'angle ou un étayage est nécessaire ;
B) positionner une extrémité inférieure d'un étai (300, 301) sur chaque pièce de jonction positionnée au sol, et positionner une pièce de jonction à une extrémité supérieure de chaque étai, puis déployer la portion longitudinale télescopique de chaque étai jusqu'à ce que la pièce de jonction à leur extrémité supérieure soit appuyée en force contre le plafond, puis activer le moyen de serrage en position déployée de sorte que chaque étai soit appuyé en force entre le sol et le plafond par l'intermédiaire des pièces de jonction ;
C) pivoter les anneaux (120, 120') de chaque pièce de jonction dans une position angulaire souhaitée pour conformer le cloisonnement du local ;
D) fixer des éléments longitudinaux (201, 201') de constitution d'un cadre aux ergots des anneaux des pièces de jonction jusqu'à constituer un cadre adapté à une conformation souhaitée ;
E) fixer l'élément d'obturation souple (B) de type bâche aux éléments longitudinaux du cadre.

18. Procédé selon la revendication 17, dans lequel les éléments longitudinaux (201, 201') de constitution d'un cadre comprenant une face frontale, en position d'utilisation, munie une gorge longitudinale continue de fixation de l'élément d'obturation (B), l'étape E) est réalisée en pinçant le rebord de l'élément d'obturation dans une gorge longitudinale continue des éléments longitudinaux (201, 201') et en insérant en force des clips métalliques dans ladite gorge par-dessus la bâche, puis en insérant un joint d'étanchéité continu en force dans les clips métalliques et dans ladite gorge.

## Patentansprüche

1. Koppler (100) für ein System (200) zum Abschirmen und Schützen einer Lokalität einer Art, die durch einen Boden (S), eine Decke (P, SP) und durch Mauern (M) begrenzt ist, wobei das System (200) der Art ist, die mindestens zwei teleskopische Streben und eine Vielzahl von Längselementen (201, 201') zur Herstellung eines Rahmens zum Stützen von mindestens einem flexiblen Abdichtungselement nach Art einer Plane umfasst, **dadurch gekennzeichnet, dass** der Koppler Folgendes umfasst:
• einen Kontaktschuh (110) mit einer Anlagefläche, die einen Zylinder (111) bestimmter Höhe (h) umfasst, der eine Längsachse (X - X) aufweist und mit einer ersten peripheren Halteschulter (112) versehen ist,
• zwei übereinanderliegende Ringe (120, 120'), die um den Zylinder (111) des Kontaktschuhs eingeführt und bezüglich einander drehbar montiert sind, wobei jeder Ring eine periphere Querausfalzung (121, 121') aufweist, die durch einen Ausfalzungsboden (121a), eine Ausfalzungsbasis (121b) und einen Ausfalzungsrand (121c) begrenzt ist, wobei die beiden Ausfalzungen in der Gebrauchsposition gemeinsam eine periphere Nut (122) zur reversiblen Befestigung eines Gelenks (J) zur Befestigung des Abdichtungselements bilden, wobei jeder Ring ferner eine Zentrifugalnase (123, 123') für die Befestigung eines Längselements (201, 201') des Abschirm- und Schutzsystems in der Gebrauchsposition umfasst,
• einen Sockel (130) zum Stützen einer teleskopischen Strebe (300, 301) in der Gebrauchsposition, der mit einer zweiten Halteschulter (131) versehen ist, wobei der Stützsockel (130) und der Kontaktschuh (110) komplementäre Befestigungsmittel (113 - 132) umfassen, wobei die Höhe (h) des Zylinders (111) derart gewählt ist, dass die Ringe (120, 120') drehfrei um den Zylinder (111), jedoch in Anlage an den beiden Halteschultern (112 - 131) sind, wenn der Sockel (130) an dem Schuh (110) befestigt ist.

2. Koppler nach Anspruch 1, wobei die beiden Ringe (120, 120') identisch und einander gegenüber um den Zylinder des Kontaktschuhs angeordnet sind.

3. Koppler nach einem der Ansprüche 1 oder 2, wobei jede Nase (123, 123') einen fixierten Abschnitt (123a, 123a') zur Verbindung mit dem Ring und einen Schwenkabschnitt (123b, 123b') zur Befestigung eines Längselements (201, 201') des Abschirm- und Schutzsystems umfasst, der um eine Schwenkachse (123c - 123c') zwischen einer mit dem Ring, der die Nase trägt, koplanaren Position und einer senkrecht zu dem Ring, der die Nase trägt, verlaufenden Position schwenkend an dem fixierten Abschnitt (123a, 123a') montiert ist.

4. Koppler nach Anspruch 3, wobei der fixierte Abschnitt (123a, 123a') einen geraden Rand (124) umfasst, der tangential mit dem Boden (121a) der Ausfalzung (121) des Rings verbunden ist und in einen konkaven gekrümmten Rand (125) übergeht, der tangential mit dem Rand (121c) der Ausfalzung (121) verbunden ist.

5. Koppler nach einem der Ansprüche 3 oder 4, wobei der schwenkende Befestigungsabschnitt (123b, 123b') jeder Nase ein Ende (123d, 123d', 123d") mit einem zu einem Längselement (201, 201') des Abschirm- und Schutzsystems komplementären Querschnitt aufweist, so dass der Schwenkabschnitt und das Längselement in der Gebrauchsposition durch Einführen reversibel befestigt sind.

6. Koppler nach Anspruch 3 oder 5, wobei der Schwenkabschnitt (123b") jeder Nase ein hakenförmiges Befestigungsende (123e) aufweist, das dazu bestimmt ist, reversibel um die an dem fixierten Abschnitt (123a, 123a') befestigte Schwenkachse (123c") in Eingriff zu kommen.

7. Koppler nach einem der Ansprüche 1 bis 5, wobei der Sockel (130) zum Stützen einer Strebe Mittel (134) zum reversiblen Befestigen der Strebe in der Gebrauchsposition umfasst.

8. Koppler nach Anspruch 7, wobei die reversiblen Befestigungsmittel (134) Halteklauen umfassen, die dazu ausgebildet sind, in der Gebrauchsposition reversibel an einem Ende der Strebe einzurasten.

9. Koppler nach einem der Ansprüche 1 bis 8, wobei der Stützsockel und/oder der Kontaktschuh ein Verstärkungsgitter (135) umfassen, das senkrecht zu dem Stützsockel (130) verläuft.

10. Teleskopische Strebe (300, 301) für ein System (200) zum Abschirmen und Schützen einer Lokalität einer Art, die durch einen Boden (S), eine Decke (P, SP) und durch Mauern (M) begrenzt ist, wobei das System (200) von der Art ist, die mindestens zwei teleskopische Streben und eine Vielzahl von Längselementen (201, 201') zur Herstellung eines Rahmens zum Stützen von mindestens einem flexiblen Abdichtungselement (B) nach Art einer Plane umfasst, wobei die Strebe einen teleskopischen Längsabschnitt, ein Mittel zum Festspannen in der ausgebrachten Position und zwei Stützenden umfasst, **dadurch gekennzeichnet, dass** mindestens eines der Stützenden durch den Stützsockel (130) des Kopplers an einem Koppler (100) nach einem der Ansprüche 1 bis 9 befestigt ist.

11. Teleskopische Strebe nach Anspruch 10, wobei der Stützsockel des Kopplers reversibel an dem Stützende befestigt ist.

12. Teleskopische Strebe nach Anspruch 10, wobei der Stützsockel des Kopplers nicht reversibel an dem Stützende befestigt ist.

13. Teleskopische Strebe nach einem der Ansprüche 9 bis 12, wobei der teleskopische Längsabschnitt eine Vorderfläche umfasst, die in der Gebrauchsposition eine durchgehende Längskehle zur Befestigung des Abdichtungselements (B) umfasst.

14. System zum Abschirmen und Schützen einer Lokalität einer Art, die durch einen Boden (S), eine Decke (P, SP) und durch Mauern (M) begrenzt ist, wobei das System (200) von der Art ist, die mindestens zwei teleskopische Streben und eine Vielzahl von Längselementen (201, 201') zur Herstellung eines Rahmens zum Stützen von mindestens einem flexiblen Abdichtungselement (B) nach Art einer Plane umfasst, **dadurch gekennzeichnet, dass** es ferner mindestens einen Koppler (100) nach einem der Ansprüche 1 bis 9 umfasst.

15. Abschirm- und Schutzsystem nach Anspruch 14, wobei die Längselemente (201, 201'), aus denen ein Rahmen besteht, eine Vorderfläche umfasst, die in der Gebrauchsposition mit einer durchgehenden Umfangskehle zur Befestigung des Abdichtungselements (B) versehen ist.

16. Abschirm- und Schutzsystem nach einem der Ansprüche 14 oder 15, umfassend mindestens eine teleskopische Strebe (300, 301) nach einem der Ansprüche 10 bis 13.

17. Verfahren zum Abschirmen und Schützen einer Lokalität einer Art, die durch einen Boden (S), eine Decke (P, SP) und durch Mauern (M) begrenzt ist, mit einem Abschirm- und Schutzsystem nach einem der Ansprüche 14 bis 16, umfassend die folgenden Schritte:
A) Positionieren der Koppler (100) nach einem der Ansprüche 1 bis 9 auf dem Boden an Stellen der Lokalität, an denen eine Eckumlenkung oder eine Verankerung notwendig ist,
B) Positionieren eines unteren Endes einer Strebe (300, 301) auf jeden auf dem Boden positionierten Koppler und Positionieren eines Kopplers an einem oberen Ende jeder Strebe und danach Ausbringen des teleskopischen Längsabschnitts jeder Strebe, bis der Koppler an ihrem oberen Ende unter Kraftaufwand gegen die Decke gepresst ist, und danach Aktivieren des Festspannmittels in der ausgebrachten Position, so dass jede Strebe mittels der Koppler unter Kraftaufwand gegen den Boden und die Decke gepresst ist,
C) Schwenken der Ringe (120, 120') jedes Kopplers in eine gewünschte Winkelposition zur Ausgestaltung der Abschirmung der Lokalität,
D) Befestigen der Längselemente (201, 201') zur Herstellung eines Rahmens an den Nasen der Ringe der Koppler bis ein Rahmen hergestellt ist, der in einer gewünschten Ausgestaltung ausgeführt ist,
E) Befestigen des flexiblen Abdichtungselements (B) nach der Art einer Plane an den Längselementen des Rahmens.

18. Verfahren nach Anspruch 17, bei dem, wobei die Längselemente (201, 201') zur Herstellung eines Rahmens eine Vorderfläche umfassen, die in der Gebrauchsposition mit einer durchgehenden Längskehle zur Befestigung des Abdichtungselements (B) versehen ist, der Schritt E) ausgeführt wird, indem die Kante des Abdichtungselements in eine durchgehende Längskehle der Längselemente (201, 201') gequetscht wird und indem Metallklammern über die Plane unter Kraftaufwand in die Kehle eingeführt werden, wonach eine durchgehende Dichtung unter Kraftaufwand in die Metallklammern und in die Kehle eingeführt wird.

## Claims

1. Joining part (100) for a system (200) for partitioning and protecting a premises of the type delimited by a floor (S), a ceiling (P, SP) and walls (M), the system (200) being of the type comprising at least two telescopic props and a plurality of longitudinal elements (201, 201') for forming a support frame for at least one flexible closing element of the tarpaulin type, **characterized in that** the joining part comprises:
• a contact shoe (110) with a bearing surface comprising a cylinder (111) of given height (h) that has a longitudinal axis (X-X) and is provided with a first peripheral retaining shoulder (112);
• two superposed rings (120, 120') fitted around the cylinder (111) of the contact shoe and mounted so as to rotate with respect to one another, each ring having a transverse peripheral rabbet (121, 121') delimited by a rabbet end wall (121a), a rabbet bottom (121b) and a rabbet edge (121c), the two rabbets together forming, in a use position, a peripheral slot (122) for the reversible fixing of a fixing seal (J) of the closing element, each ring also comprising a centrifugal protrusion (123, 123') for fixing a longitudinal element (201, 201') of the partitioning and protecting system in the use position;
• a support base (130) for a telescopic prop (300, 301) in the use position, provided with a second retaining shoulder (131), the support base (130) and the contact shoe (110) comprising complementary fixing means (113-132), the height (h) of the cylinder (111) being chosen such that the rings (120, 120') are free to rotate about the cylinder (111) but butt against the two retaining shoulders (112-131) when the base (130) is fixed to the shoe (110).

2. Joining part according to Claim 1, wherein the two rings (120, 120') are identical and arranged opposite one another around the cylinder of the contact shoe.

3. Joining part according to either one of Claims 1 and 2, wherein each protrusion (123, 123') comprises a fixed portion (123a, 123a') for connecting to the ring and a pivoting portion (123b, 123b') for fixing a longitudinal element (201, 201') of the partitioning and protecting system, said pivoting portion (123b, 123b') being mounted on the fixed portion (123a, 123a') so as to be pivotable about a pivot pin (123c-123c') between a position coplanar with the ring that bears the protrusion and a position perpendicular to the ring that bears the protrusion.

4. Joining part according to Claim 3, wherein the fixed portion (123a, 123a') comprises a rectilinear edge (124) connected tangentially to the end wall (121a) of the rabbet (121) of the ring and continued by a concave curved edge (125) connected tangentially to the edge (121c) of the rabbet (121).

5. Joining part according to either one of Claims 3 and 4, wherein the pivoting portion (123b, 123b') for fixing each protrusion has an end (123d, 123d', 123d") with a section complementary to a longitudinal element (201, 201') of the partitioning and protecting system in order that the pivoting portion and the longitudinal element are reversibly fixed by insertion in the use position.

6. Joining part according to Claim 3 or 5, wherein the pivoting portion (123b") of each protrusion has a hook-shaped fixing end (123e) intended to be fitted reversibly around the pivot pin (123c") fixed to the fixed portion (123a, 123a').

7. Joining part according to any one of Claims 1 to 5, wherein the support base (130) for a prop comprises means (134) for reversibly fixing the prop in the use position.

8. Joining part according to Claim 7, wherein the means (134) for reversible fixing comprise retaining claws designed to snap into place reversibly against one end of the prop in the use position.

9. Joining part according to any one of Claims 1 to 8, wherein the support base and/or the contact shoe comprises a reinforcing grid (135) perpendicular to the support base (130).

10. Telescopic prop (300, 301) for a system (200) for partitioning and protecting a premises of the type delimited by a floor (S), a ceiling (P, SP) and walls (M), the system (200) being of the type comprising at least two telescopic props and a plurality of longitudinal elements (201, 201') for forming a support frame for at least one flexible closing element (B) of the tarpaulin type, the prop comprising a telescopic longitudinal portion, a means for clamping in the deployed position, and two bearing ends, **characterized in that** at least one of the bearing ends is fixed to a joining part (100) according to any one of Claims 1 to 9 by the support base (130) of the joining part.

11. Telescopic prop according to Claim 10, wherein the support base of the joining part is fixed reversibly to the bearing end.

12. Telescopic prop according to Claim 10, wherein the support base of the joining part is fixed non-reversibly to the bearing end.

13. Telescopic prop according to any one of Claims 9 to 12, wherein the telescopic longitudinal portion comprises a frontal face, in the use position, comprising a continuous longitudinal groove for fixing the closing element (B).

14. System for partitioning and protecting a premises of the type delimited by a floor (S), a ceiling (P, SP) and walls (M), the system (200) being of the type comprising at least two telescopic props and a plurality of longitudinal elements (201, 201') for forming a support frame for at least one flexible closing element (B) of the tarpaulin type, **characterized in that** it also comprises at least one joining part (100) according to any one of claims 1 to 9.

15. Partitioning and protecting system according to Claim 14, wherein the longitudinal elements (201, 201') for forming a frame comprise a frontal face, in the use position, provided with a continuous peripheral groove for fixing the closing element (B).

16. Partitioning and protecting system according to either one of Claims 14 and 15, comprising at least one telescopic prop (300, 301) according to any one of Claims 10 to 13.

17. Method for partitioning and protecting a premises of the type delimited by a floor (S), a ceiling (P, SP) and walls (M), with a partitioning and protecting system according to any one of Claims 14 to 16, comprising the following steps:
A) positioning the joining parts (100) according to any one of Claims 1 to 9 on the floor at locations in the premises where an angular member or propping is necessary;
B) positioning a lower end of a prop (300, 301) on each joining part positioned on the floor, and positioning a joining part at an upper end of each prop, then deploying the telescopic longitudinal portion of each prop until the joining part at the upper end thereof is forcibly pressed against the ceiling, then activating the means for clamping in the deployed position such that each prop is forcibly compressed between the floor and the ceiling by way of the joining parts;
C) pivoting the rings (120, 120') of each joining part into a desired angular position to configure the partitioning of the premises;
D) fixing longitudinal elements (201, 201') for forming a frame to the protrusions of the rings of the joining parts until a frame suitable for a desired configuration is formed;
E) fixing the flexible closing element (B) of the tarpaulin type to the longitudinal elements of the frame.

18. Method according to Claim 17, wherein, with the longitudinal elements (201, 201') for forming a frame comprising a frontal face, in the use position, provided with a continuous longitudinal groove for fixing the closing element (B), step E) is carried out by gripping the edge of the closing element in a continuous longitudinal groove of the longitudinal elements (201, 201') and by force-fitting metal clips into said groove on top of the tarpaulin, and then by force-fitting a continuous seal into the metal clips and into said groove.
